# EUROPÄISCHE PATENTSCHRIFT

(11) **EP 3 811 564 B1**
(45) Veröffentlichungstag und Bekanntmachung des Hinweises auf die Patenterteilung: **06.08.2025**
(21) Anmeldenummer: 19733455.0
(22) Anmeldetag: 21.06.2019
(51) Int. Cl.: H04L 9/32, H04L 9/00, H04W 12/03

(54) **VERFAHREN ZUR SICHERUNG VON FAHRZEUGKOMPONENTEN UND ENTSPRECHENDE FAHRZEUGKOMPONENTE**
METHOD FOR SECURING VEHICLE COMPONENTS AND CORRESPONDING VEHICLE COMPONENT
PROCÉDÉ DE BLOCAGE DE COMPOSANTS DE VÉHICULE ET COMPOSANT DE VÉHICULE CORRESPONDANT

(30) Priorität: 25.06.2018 DE 102018210318
(43) Veröffentlichungstag der Anmeldung: 28.04.2021
(73) Patentinhaber: VOLKSWAGEN AKTIENGESELLSCHAFT, 38440 Wolfsburg (DE)
(72) Erfinder: GERLACH, Simon, 38553 Wasbüttel (DE)
(86) Internationale Anmeldenummer: PCT/EP2019/066489
(87) Internationale Veröffentlichungsnummer: WO 2020/002155

(56) Entgegenhaltungen:
- DE-A1- 102008 004 808
- DE-A1- 102012 004 925
- DE-A1- 102016 215 914
- DE-A1- 102016 215 914
- DE-A1- 102016 215 915
- DE-A1- 102016 215 915
- YUAN YONG ET AL: "Towards blockchain-based intelligent transportation systems", 2016 IEEE 19TH INTERNATIONAL CONFERENCE ON INTELLIGENT TRANSPORTATION SYSTEMS (ITSC), IEEE, 1 November 2016 (2016-11-01), pages 2663 - 2668, XP033028713, DOI: 10.1109/ITSC.2016.7795984
- YUAN YONG ET AL: "Towards blockchain-based intelligent transportation systems", 2016 IEEE 19TH INTERNATIONAL CONFERENCE ON INTELLIGENT TRANSPORTATION SYSTEMS (ITSC), IEEE, 1 November 2016 (2016-11-01), pages 2663 - 2668, XP033028713, DOI: 10.1109/ITSC.2016.7795984

## Beschreibung

Die vorliegende Erfindung betrifft ein Verfahren zur Sicherung von Fahrzeugkomponenten. Weiterhin betrifft die Erfindung eine Fahrzeugkomponente, die ein solches Verfahren ausführt und ein Kraftfahrzeug, das eingerichtet ist, ein solches Verfahren auszuführen oder mehrere solche Fahrzeugkomponenten aufweist.

Im Automobilbereich besteht erheblicher Bedarf, elektronische Fahrzeugkomponenten und Steuergeräte effektiv vor Manipulationen und Diebstahl zu schützen. So wird gegenwärtig davon ausgegangen, dass in Deutschland jeder dritte Gebrauchtwagen einen manipulierten Kilometerstand aufweist und der den Kilometerstand anzeigende Kilometerzähler, der üblicherweise mit dem Tachometer kombiniert bzw. in das Kombiinstrument integriert ist, einen zu geringen Kilometerstand anzeigt.

Dieses kann durch eine Tachomanipulation erfolgen, bei der ein Manipulationsgerät an die Onboard-Diagnosebuchse des Fahrzeugs (OBD) angeschlossen wird und der bisherige Kilometerstand überschrieben wird. Eine solche Manipulation ist einfach möglich, da ein Ausbau von Bauteilen nicht nötig ist. Weiterhin lässt sich eine solche Manipulation oft kaum nachweisen. Ebenso kann ein Fahrzeug einen unrichtigen Kilometerstand anzeigen, wenn die den Kilometerzähler umfassende, ursprünglich bei der Produktion verbaute Fahrzeugkomponente durch eine legal oder illegal erworbene entsprechende Fahrzeugkomponente ersetzt wird.

Um Tachomanipulationen zu verhindern oder zumindest zu erschweren, erfolgt in modernen Fahrzeugen häufig eine redundante Ablage des Kilometerstands in mehreren Steuergeräten des Fahrzeugs. Wenn der Kilometerstand dann beispielsweise nur in einem der Steuergeräte überschrieben wird, kann durch Vergleich der abgelegten Kilometerstände eine Manipulation erkannt werden.

Weiterhin gibt es Überlegungen, die sogenannte Blockchain-Technologie gegen Tachomanipulationen einzusetzen. Hierbei sollen die Kilometerstände von einer Vielzahl von Fahrzeugen regelmäßig an fahrzeugexterne Server übertragen werden, um in einer öffentlichen Blockchain-Datenbank abgespeichert zu werden. Ansätze hierzu sind in der DE 10 2016 007 472 A1 und der DE 10 2016 215 914 A1 beschrieben.

Ebenso soll für diverse Fahrzeugkomponenten die Verwendung von gestohlenen, gefälschten oder für das Fahrzeug nicht autorisierten Komponenten durch den sogenannten Komponentenschutz unattraktiv gemacht werden. Hierbei kann eine Fahrzeugkomponente entweder nicht in Betrieb genommen werden oder ihr Funktionsumfang zumindest eingeschränkt werden, wenn sie in einem anderen als dem ursprünglichen Fahrzeug verbaut wird. Für die Erkennung, ob die betroffene Fahrzeugkomponente in einem anderen Fahrzeug als zuvor verbaut ist, sind verschiedene Verfahren bekannt.

So wird bei einer dezentralen Realisierung durch eine Parametrisierung während der Fahrzeugproduktion oder beim ersten Aufstart in jeder zu schützenden Fahrzeugkomponente eine eindeutige eigene Kennung erzeugt. Diese Kennungen werden bei jedem Fahrzeugaufstart von den zu schützenden Fahrzeugkomponenten auf dem Fahrzeugbus ausgesendet bzw. empfangen. Die jeweilige Fahrzeugkomponente speichert im unangelernten Zustand, das heißt beim ersten Betrieb oder nach Zurücksetzen durch eine authorisierte Stelle, die Kennungen der im selben Fahrzeug verbauten übrigen zu schützenden Fahrzeugkomponenten. Beim späteren Wiederaufstart im angelernten Zustand vergleichen diese dann die Kennungen der nun im Fahrzeug erkannten zu schützenden Fahrzeugkomponenten mit den gespeicherten Kennungen. Wenn eine Fahrzeugkomponente dabei Abweichungen oberhalb einer bestimmten Schwelle feststellt, z.B. bei mehr als einer abweichenden zu schützenden Fahrzeugkomponente, nimmt diese an, dass sie in einem anderen Fahrzeug verbaut ist und veranlasst entsprechende Maßnahmen.

Bei einer zentralen Realisierung wird durch die Parametrisierung in einem zentralen Steuergerät, beispielsweise einem Gateway, das den Datentransfer innerhalb des Netzwerksystems des Fahrzeugs koordiniert, pro zu schützender Fahrzeugkomponente ein Schlüssel A und in der zu schützenden Fahrzeugkomponente ein dazu passender Schlüssel B hinterlegt. Das zentrale Steuergerät und die zu schützenden Fahrzeugkomponenten können daraufhin miteinander über geeignete kryptografische Verfahren kommunizieren, um festzustellen, ob in der Gegenstelle der erwartete passende Schlüssel hinterlegt ist. Auf diese Weise können die zu schützenden Fahrzeugkomponenten feststellen, ob sie in dem Fahrzeug verbaut sind, für das sie eingerichtet wurden. Auch das zentrale Steuergerät kann so feststellen, ob alle zu schützenden Fahrzeugkomponenten weiterhin in dem Fahrzeug verbaut sind.

In der DE 10 2008 004 808 A1 wird ein Verfahren zum Betreiben eines elektronischen Wartungsbuchs für ein Fahrzeug beschrieben, bei dem durchgeführte Wartungsarbeiten mit Fahrzeugdaten verknüpft und in einem in dem Fahrzeug angeordneten Speicher gespeichert werden. Dabei kann vorgesehen sein, dass der in dem Speicher gespeicherte Informationsinhalt des elektronischen Wartungsbuchs in einem weiteren Speicher in dem Fahrzeug als eine Kopie oder in Teilen in mehreren anderen Speichern in dem Fahrzeug gespeichert wird. Hierbei können auch Ersatzteile betreffende Informationen über einen fahrzeugexternen Servicerechner an das elektronische Wartungsbuch übertragen werden und dabei mit Fahrzeugdaten verknüpft und in dem elektronischen Wartungsbuch gespeichert werden.

Es ist eine Aufgabe der Erfindung, ein verbessertes Verfahren zum Schutz von Fahrzeugkomponenten vor Manipulationen und Diebstahl und eine entsprechende Fahrzeugkomponente zur Verfügung zu stellen.

Diese Aufgabe wird durch ein Verfahren mit den Merkmalen des Anspruchs 1 sowie durch eine entsprechende Fahrzeugkomponente gemäß Anspruch 7 gelöst. Bevorzugte Ausgestaltungen der Erfindung sind Gegenstand der abhängigen Ansprüche.

Das erfindungsgemäße Verfahren zur Sicherung von Fahrzeugkomponenten umfasst die folgenden Schritte:
- Erfassen von Daten zur Fahrzeugnutzung durch eine erste von mehreren Fahrzeugkomponenten;
- Ergänzen einer in der ersten Fahrzeugkomponente abgespeicherten Datenstruktur, die eine Liste von erfassten Daten zur Fahrzeugnutzung enthält, wobei die erfassten Daten in Blöcken abgelegt werden, die miteinander verkettet sind, indem jeder Block eine kryptographische Prüfsumme des vorherigen Blocks enthält, um einen Block mit weiteren Daten zur Fahrzeugnutzung, wobei der Block durch diese erste Fahrzeugkomponente hinzugefügt wird und der hinzugefügte Block eine kryptographische Prüfsumme des bisher letzten Blocks der Datenstruktur enthält;
- Übertragen des neuen Blocks an mindestens eine der anderen Fahrzeugkomponenten; und
- Überprüfen der Gültigkeit des hinzugefügten Blocks mittels der enthaltenen kryptographischen Prüfsumme und einer lokal in der mindestens einen anderen Fahrzeugkomponente vorliegenden Fassung der Datenstruktur, wobei bei positivem Ergebnis der Überprüfung die ergänzte Datenstruktur in der mindestens einen anderen Fahrzeugkomponente abspeichert wird und bei negativem Ergebnis der Überprüfung der Funktionsumfang der ersten Fahrzeugkomponente eingeschränkt wird oder diese in dem Fahrzeug nicht in Betrieb genommen werden kann.

Einerseits können so durch die verteilte Ablage der Daten zur Fahrzeugnutzung in mehreren Fahrzeugkomponenten manipulationsgefährdete Informationen, wie Kilometerstände, geschützt werden. Andererseits kann mit demselben Verfahren ein Komponentenschutz erfolgen. Auf diese Weise können damit also in einem einzigen Verfahren sowohl Maßnahmen zur Verhinderung von Datenmanipulationen als auch zum Komponentenschutz realisiert werden. Weiterhin kann gegenüber den bekannten Verfahren zum Komponentenschutz Zeit in der Fahrzeugproduktion gespart werden, da auf die Erzeugung und Einbringung von Fahrzeug- und Steuergerät-individuellem Schlüsselmaterial bzw. Kennungen in die zu schützenden Fahrzeugkomponenten verzichtet werden kann. Auch ist es im Gegensatz zu dem oben erwähnten zentralen Verfahren nicht mehr nötig, die Schlüssel oder die ihnen zugrundeliegenden Informationen dauerhaft zu speichern, damit nach einem autorisierten Teiletausch einer Fahrzeugkomponente in dieser wieder derselbe Schlüssel für das Fahrzeug eingespielt werden kann.

Gemäß einer bevorzugten Ausführungsform der Erfindung wird die Gültigkeit des hinzugefügten Blocks von mehreren anderen Fahrzeugkomponenten überprüft und mit einer Mehrheitsentscheidung entschieden, ob der neue Block akzeptiert wird. Durch eine solche gleichzeitige Überprüfung der Gültigkeit durch mehrere Fahrzeugkomponenten kann die Sicherheit des Verfahrens deutlich gesteigert werden.

Besonders vorteilhaft ist es, wenn eine Fahrzeugkomponente, in der noch keine Datenstruktur abgespeichert ist, initial die erste von einer der anderen Fahrzeugkomponenten empfangene Datenstruktur übernimmt.

Gemäß einer weiteren Ausführungsform der Erfindung wird bei einer Fahrzeugkomponente, die ursprünglich in einem ersten Fahrzeug verbaut war, zur Autorisierung der Inbetriebnahme in einem anderen Fahrzeug die in der Fahrzeugkomponente gespeicherte Datenstruktur gelöscht.

Gemäß einer weiteren Ausführungsform der Erfindung wird bei dem Vorliegen unterschiedlicher Fassungen der Datenstruktur in den Fahrzeugkomponenten des Fahrzeugs die in der Mehrheit der Fahrzeugkomponenten vorliegende Datenstruktur verwendet.

Vorteilhafterweise umfassen die Daten zur Fahrzeugnutzung mindestens den Kilometerstand des Fahrzeugs.

Vorzugsweise wird das erfindungsgemäße Verfahren in mehreren Fahrzeugkomponenten eines Kraftfahrzeugs eingesetzt.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ausführungsbeispiel für das erfindungsgemäße Verfahren zur Sicherung von Fahrzeugkomponenten;
- Fig. 2: zeigt schematisch einen möglichen Aufbau einer für die Ausführung des erfindungsgemäßen Verfahrens verwendeten Datenstruktur mit durch Fahrzeugkomponenten generierten Blöcken, die Daten zur Fahrzeugnutzung enthalten; und
- Fig. 3: zeigt schematisch einen beispielhaften Verbund von drei Fahrzeugkomponenten (A), bei dem eine Ergänzung der Datenstruktur um einen neuen Block, der einen neu erfassten Kilometerstand enthält, erfolgt (B), eine Überprüfung des neuen Blocks (C, E) sowie die jeweilige Folge bei positivem (D) und negativem (F) Ergebnis der Überprüfung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

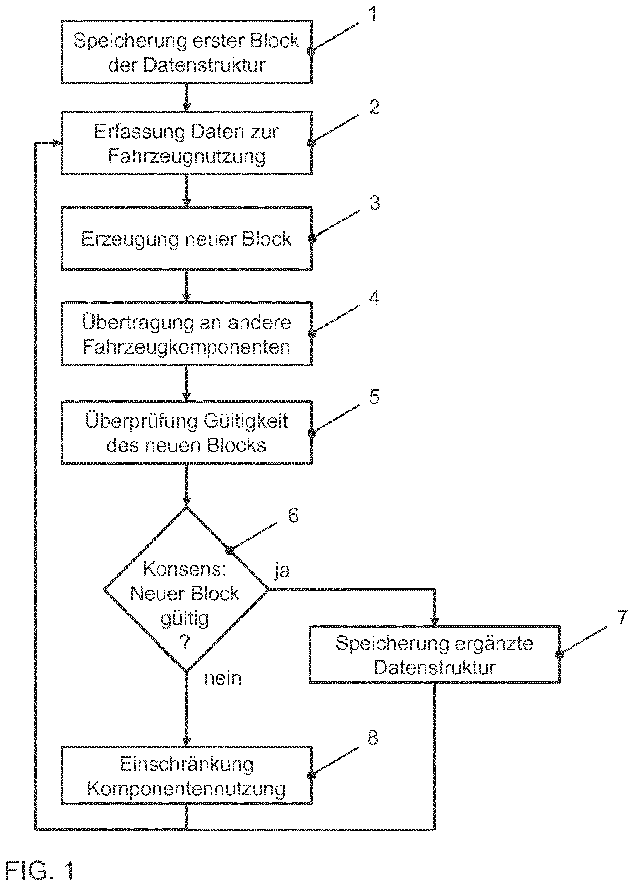

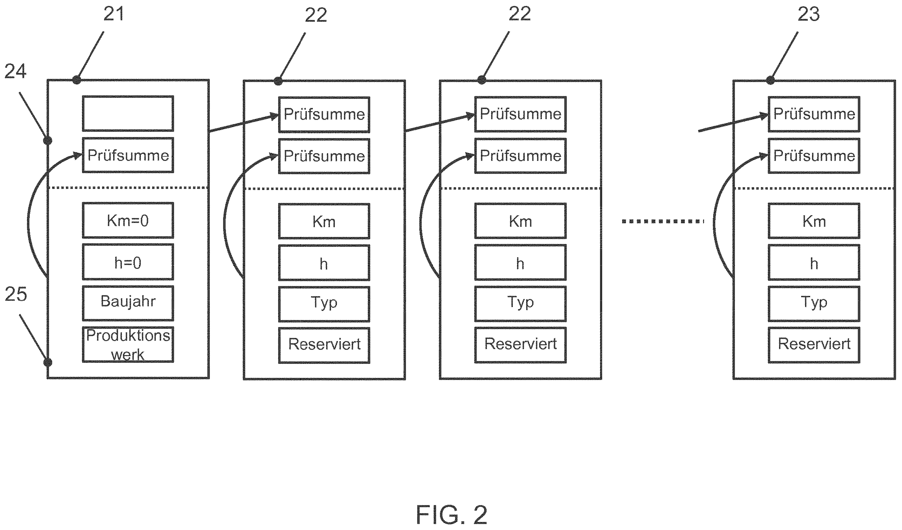

Figur 1 zeigt schematisch ein Ausführungsbeispiel für das erfindungsgemäße Verfahren zur Sicherung von Fahrzeugkomponenten in einem Fahrzeug. Die Sicherung der Fahrzeugkomponenten kann hierbei insbesondere basierend auf einer Datenstruktur wie der sogenannten Blockchain erfolgen. Neben dem Komponentenschutz wird damit gleichzeitig auch eine manipulationssichere Ablage von Daten zur Fahrzeugnutzung, wie beispielsweise des Kilometerstands, oder auch eines Fahrzeugjournals mit detaillierten Angaben beispielsweise zu vergangenen Fahrten des Fahrzeugs, Betriebsstunden, Unfällen, Wartungen ermöglicht. Details zu der Datenstruktur werden weiter unten im Zusammenhang mit Figur 2 beschreiben.

In einem Verfahrensschritt 1 wird bei einer ersten Verwendung ohne bisher gespeicherte Datenstruktur oder nach einem Löschen der Datenstruktur der erste Block der Datenstruktur in einer Fahrzeugkomponente des Fahrzeugs abgespeichert. Bei einer Blockchain ist dieser erste Block auch als sogenannter Genesis-Block bekannt. Dieser erste Block wird nicht von einer Fahrzeugkomponente berechnet, sondern ist statisch vorgegeben.

In einem Verfahrensschritt 2 werden nun von den Fahrzeugkomponenten des Fahrzeugs Daten zur Fahrzeugnutzung erfasst. Unter den Daten zur Fahrzeugnutzung werden hierbei beliebige das Fahrzeug betreffende Parameter verstanden, die zu einem bestimmten Zeitpunkt ermittelt werden. So können beispielsweise die folgenden Daten zur Fahrzeugnutzung erfasst werden:
- Kilometerstände;
- Informationen zu Nutzungszeiträumen wie die Zeitpunkte des Fahrzeugstarts und des Abstellen des Fahrzeugs oder die Dauer der jeweiligen Fahrzeugnutzung ("Betriebsstunden");
- Informationen über Abstellorte des Fahrzeugs wie beispielsweise GPS-Koordinaten;
- eindeutige Bezeichner der jeweiligen Fahrten über vereinbarte IDs oder Zufallszahlen.

Ebenso können aber auch andere für die Fahrzeugnutzung wesentliche Daten erfasst werden, wie beispielsweise Daten, bei denen gemäß gesetzlicher Vorgaben eine Aufzeichnungspflicht besteht oder eine Information darüber, ob sich das Fahrzeug in einem manuellen, halbautonomen oder autonomen Fahrmodus befindet bzw. wann von einem dieser Fahrmodi in einen anderen Fahrmodus gewechselt wird.

Die Erfassung der Daten kann beispielsweise zu bestimmten Zeitpunkten bzw. Anlässen wie beim Start oder der Beendigung einer Fahrzeugfahrt, bei einem Unfall oder einer Fahrzeugwartung erfolgen oder aber auch in regelmäßigen Zeitabständen, ohne dass hierfür ein bestimmtes Ereignis vorliegen muss. Ebenso kann dieses aber auch beispielsweise bei Veränderung des erfassten Parameters um einen vorgegebenen Betrag oder zum Zeitpunkt der Betätigung einer Fahrzeugkomponente erfolgen.

Die erfassten Daten werden dann in einem Verfahrensschritt 3 als Eintrag in einem neuen Block vermerkt und durch eine Berechnung der Prüfsumme für diesen neuen Block abgesichert. Die Prüfsumme wird hierfür in den neuen Block aufgenommen und ermöglicht eine spätere Überprüfung der Integrität der Daten. Weiterhin wird in dem neuen Block die Prüfsumme des bisher letzten Blocks der Datenstruktur aufgenommen, um den neuen Block zunächst lokal mit der bestehenden Datenstruktur zu verketten.

Dieses kann dezentral jeweils durch die Fahrzeugkomponente, welche die Daten erfasst hat, erfolgen. Ebenso kann aber auch zentral durch eine hierfür speziell zuständige Fahrzeugkomponente, wie ein zentrales Steuergerät, ein neuer Block gebildet werden, der dann ggfs. auch mehrere neue Einträge von verschiedenen Daten zur Fahrzeugnutzung in dem neuen Block zusammenfassen kann.

Da die Datenstruktur dezentral auf den verschiedenen Fahrzeugkomponenten vorliegt, müssen sich diese auf eine Erweiterung der Datenstruktur einigen. Hierfür sendet die Fahrzeugkomponente, in welcher der neue Block vorliegt, in Verfahrensschritt 4 den neuen Block oder auch die komplette, um den neuen Block ergänzte Datenstruktur an die anderen Fahrzeugkomponenten des Fahrzeugs. Dieser Datenaustausch unter den zu schützenden Fahrzeugkomponenten kann in regelmäßigen Zeitabständen oder aber auch unmittelbar nach Erfassen neuer Daten oder dem Erzeugen eines neuen Blocks erfolgen.

Daraufhin erfolgt in Verfahrensschritt 5 eine Überprüfung des neuen Blocks durch die anderen Fahrzeugkomponenten. Hierfür prüft jeder Empfänger zunächst für sich anhand der Prüfsumme, ob der neue Block gültig ist.

Durch einen Konsens-Algorithmus, der im einfachsten Fall eine einfache Mehrheitsentscheidung trifft, wird dann in Verfahrensschritt 6 entschieden, ob der neue Block akzeptiert wird. Eine solche Mehrheitsentscheidung kann beispielsweise so getroffen werden, dass bei einer Validierung der Prüfsumme durch alle anderen an der Überprüfung beteiligten Fahrzeugkomponenten, einen Großteil oder auch nur mehr als die Hälfte der beteiligten Fahrzeugkomponenten der neue Block akzeptiert wird.

Dieses könnte zwar beispielsweise bei einer Manipulationsabsicht umgangen werden, indem ein Großteil oder auch alle anderen an der Überprüfung beteiligten Fahrzeugkomponenten ausgetauscht würden, wäre dann aber sehr aufwendig und in aller Regel nicht wirtschaftlich. So würde beispielsweise eine Manipulation des Kilometerstands eines Fahrzeugs praktisch ausgeschlossen, wenn dieses für eine Konsensschaffung neben der Manipulation des den Kilometerstand generierenden Steuergerätes auch den Austausch von Steuergeräten wie dem Motor-, Getriebe- und Lenksystem-Steuergerät erfordern würde. Fahrzeugkomponenten, die gut zugänglich und leicht auszubauen sind, können daher durch einen Verbund mit nur schwer bzw. aufwendig auszutauschenden Fahrzeugkomponenten sicher gegen Diebstahl geschützt werden.

Ebenso kann vorgesehen werden, die Validierung durch die verschiedenen Fahrzeugkomponenten unterschiedlich zu wichten, indem Fahrzeugkomponenten, die nur schwer auszubauen sind, eine höhere Wichtung zukommt.

Besteht in Verfahrensschritt 6 Konsens darüber, dass der neue Block gültig ist, so wird dieser in Verfahrensschritt 7 an die Datenstruktur des Fahrzeugs angehängt.

Ergibt dagegen in Verfahrensschritt 6 die Überprüfung des neuen Blocks bei der Mehrheit der anderen Fahrzeugkomponenten eine Abweichung bei der Prüfsumme, so wird in Verfahrensschritt 8 die Nutzung der Fahrzeugkomponente, welche den neuen Block an die Datenstruktur des Fahrzeuges anfügen wollte, eingeschränkt.

Figur 2 zeigt schematisch einen möglichen Aufbau einer für die Ausführung des erfindungsgemäßen Verfahrens verwendeten Datenstruktur mit durch Fahrzeugkomponenten generierten Blöcken, die Daten zur Fahrzeugnutzung enthalten.

Der erste Block 21 innerhalb der Datenstruktur wird, anders als alle anderen Blöcke, nicht von einer der vernetzen Fahrzeugkomponenten während des Betriebs des Fahrzeugs erzeugt. Stattdessen wird dieser in mindestens einem der Fahrzeugkomponenten bereits bei der Produktion des Fahrzeugs generiert und fest in diesem verankert. Ebenso kann dieser erste Block im Rahmen einer Initialisierung bei Produktionsende, aber auch bereits in alle an dem Datenaustausch im Fahrzeug beteiligten Fahrzeugkomponenten eingeschrieben werden.

Um einen gemeinsamen Datensatz als Startpunkt bzw. einen initialen Konsens zu schaffen, können grundsätzlich beliebige Daten in einen Nutzdatenbereich (englisch: payload) 25 des ersten Blocks 21 eingeschrieben werden. In dem dargestellten Beispiel werden hier der Kilometerstand und die Betriebsstunden auf Null gesetzt. Weiterhin können hier vorteilhafterweise auch Informationen zur Produktion, wie das Baujahr und das Produktionswerk, abgelegt werden. Zusätzlich oder stattdessen können beispielsweise auch eine Identifizierungsnummer des Fahrzeugs, wie die Fahrgestellnummer, oder das genaue Produktionsdatum gespeichert werden.

Weiterhin weist der erste Block einen Kopfdatenbereich (englisch: header) 24 auf, in dem sich eine über die Nutzdaten ermittelte Prüfsumme befindet. Diese ermöglicht, den Block vor Manipulationen zu schützen. Hierfür können insbesondere sogenannte Hash-Funktionen bzw. Hash-Algorithmen verwendet werden.

Auch die auf den ersten Block folgenden Blöcke 22 weisen jeweils einen Kopfdatenbereich und einen Nutzdatenbereich auf. Hierbei wird in den Kopfdaten die Prüfsumme des unmittelbar vorhergehenden Blockes abgespeichert und so eine Verknüpfung zwischen diesen beiden Blöcken hergestellt.

In den Nutzdaten werden in diesem Beispiel mehrere Informationen abgespeichert, die zu einem bestimmten Zeitpunkt während der Nutzung des Fahrzeuges von einer oder mehreren Fahrzeugkomponenten bzw. Steuergeräten erfasst worden sind. So wird der zu diesem Zeitpunkt aktuelle Kilometerstand und der aktuelle Wert der Betriebsstunden des Fahrzeugs in den Nutzdaten abgelegt. Weiterhin ist in diesem Beispiel vorgesehen, den Eintragungstyp zu vermerken, d.h. ob die erfassten Daten während der Fahrt, der Wartung, bei einem Unfall oder bei einem anderen Ereignis erfasst worden sind. Schließlich ist in diesem Beispiel ein Bereich der Nutzdaten für weitere spezifische Informationen wie beispielsweise den Unfalltyp reserviert.

Für die Nutzdaten wird auch hier wieder eine Prüfsumme ermittelt, die in dem Kopfbereich des Blocks zusätzlich zu der Prüfsumme des vorherigen Blockes abgelegt wird. Die ermittelte Prüfsumme wird dann wiederum zur Verkettung mit dem darauffolgenden Datenblock verwendet. Auf diese Weise kann eine beliebige Zahl von Datenblöcken, ausgehend von dem ersten Datenblock 21 bis zu dem letzten Datenblock 23, verkettet werden.

Zusätzlich zu den Prüfsummen können sich in den Kopfdaten der Blöcke ferner Zeitstempel befinden, die den Zeitpunkt der Erzeugung des jeweiligen Blocks bzw. des dort vermerkten Ereignisses vermerken.

Da mittlerweile in Kraftfahrzeugen eine Vielzahl von verschiedenen elektronischen Komponenten bzw. Steuergeräten verbaut sind, können von diesen in den Nutzdaten zusätzlich zu den exemplarisch gezeigten Daten noch verschiedenste weitere Daten oder statt der genannten Daten auch andere Daten in den jeweiligen Blöcken der Datenstruktur abgelegt werden.

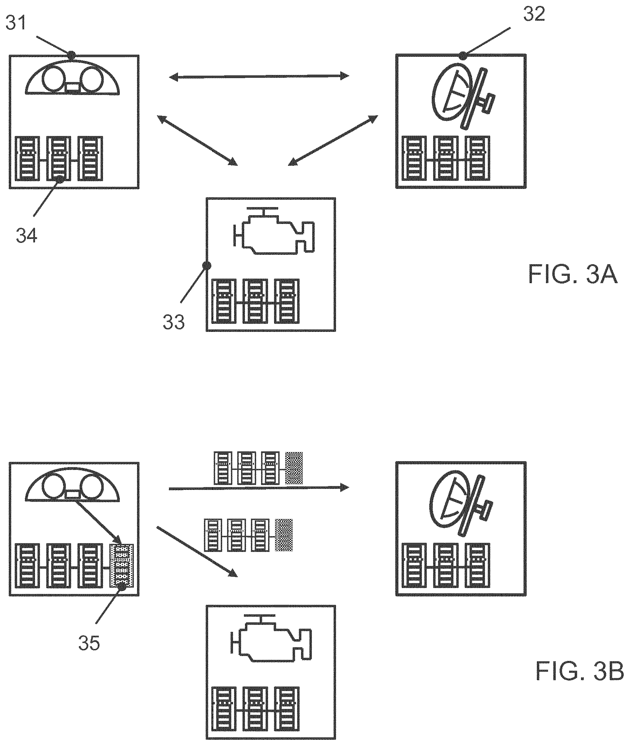

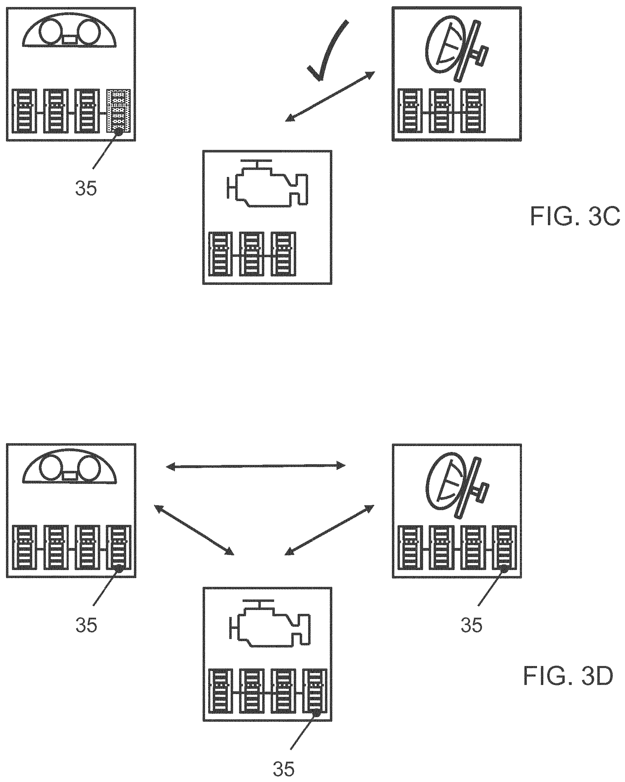

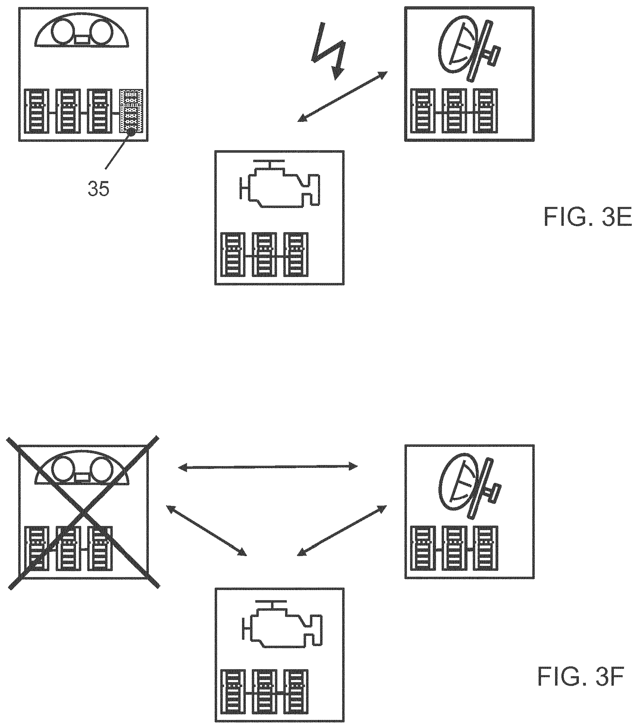

Ein Beispiel mit einer Ergänzung der Datenstruktur um einen neuen Block, das der Übersichtlichkeit halber auf drei Fahrzeugkomponenten 31, 32, und 33 beschränkt ist, wird schematisch in Figur 3 dargestellt.

Die Fahrzeugkomponente 31, symbolisiert durch ein Kombiinstrument, liefert hierbei den jeweils aktuellen Kilometerstand des Fahrzeugs. Weiterhin kann eine Fahrzeugkomponente 32, beispielsweise ein Airbag-Steuergerät, Daten im Fall eines Unfalls des Fahrzeugs, wie beispielsweise das Auslösen eines Airbags oder die sogenannte Crashschwere, zur Verfügung stellen. Schließlich kann eine Fahrzeugkomponente 33, beispielsweise ein Motor-Steuergerät, Daten bezüglich der Betriebsstunden des Fahrzeugs bereitstellen.

Wie in Figur 3A angedeutet, kann jede der drei Fahrzeugkomponenten mit den anderen beiden Fahrzeugkomponenten Daten austauschen. Hierfür können die Fahrzeugkomponenten über einen Datenbus, beispielsweise einen CAN-Bus, miteinander verbunden sein. Es kann aber ebenso auch eine drahtlose Kommunikation zwischen den Fahrzeugkomponenten vorgesehen sein. In den Fahrzeugkomponenten 31, 32, und 33 liegt jeweils die gleiche Datenstruktur 34 vor, die in dem dargestellten Beispiel der Einfachheit halber lediglich drei Datenblöcke umfasst.

Erfasst die Fahrzeugkomponente 31 nun, beispielsweise nach Beendigung einer Fahrt des Fahrzeugs, einen neuen Kilometerstand des Fahrzeugs, so wird dieser, wie in Figur 3B dargestellt, durch die Fahrzeugkomponente 31 in einem neuen Block 35 vermerkt. Um eine Überprüfung des neuen Blocks durch die anderen Fahrzeugkomponenten zu ermöglichen, sendet die Fahrzeugkomponente 35 die um den neuen Block ergänzte Datenstruktur an die anderen beiden Fahrzeugkomponenten 32 und 33. Ebenso kann aber auch statt der kompletten Datenstruktur lediglich der neue Block für die Überprüfung übertragen werden. Daraufhin erfolgt in den Fahrzeugkomponenten 32 und 33 eine Überprüfung des neuen Blocks mittels der in dem neuen Block enthaltenen Prüfsumme.

Kommen beide Fahrzeugkomponenten 32 und 33, wie in Figur 3C durch einen Korrekturhaken symbolisiert, zu dem Ergebnis, dass der neue Block gültig ist, so fügen sie diesen ihrer lokal vorliegenden Version der Datenstruktur des Fahrzeugs zu. Unter der Datenstruktur des Fahrzeugs wird hierbei zu einem bestimmten Zeitpunkt jeweils die Datenstruktur angenommen, die von der Mehrheit der Fahrzeugkomponenten im Fahrzeug verwendet wird. Weiterhin teilen sie das positive Ergebnis ihres Mehrheitsentscheides der Fahrzeugkomponente 31 mit, die daraufhin den neuen Block ihrer Version der Datenstruktur ebenfalls hinzufügt. Damit liegt dann bei einer positiven Konsensentscheidung, wie in Figur 3D dargestellt, im Anschluss in allen Fahrzeugkomponenten die gleiche Datenstruktur inklusive des neuen Blocks 35 vor.

Stellen dagegen gemäß Figur 3E die Fahrzeugkomponenten 32 und 33 anhand einer Abweichung der Prüfsumme eine Manipulation in der Datenstruktur durch die Fahrzeugkomponente 31 fest, so wird, wie in Figur 3F dargestellt, diese Fahrzeugkomponente stillgelegt oder zumindest ihr Funktionsumfang bis auf weiteres eingeschränkt.

Hierbei kann auch unterschiedlich vorgegangen werden, je nachdem, ob die lokale Datenstruktur der Fahrzeugkomponente 31 stark oder aber nur geringfügig von der Datenstruktur des Fahrzeugs abweicht.

Ist die lokale Datenstruktur völlig anders als die Datenstruktur des Fahrzeugs, so kann davon ausgegangen werden, dass die Fahrzeugkomponente 31 ursprünglich aus einem anderen Fahrzeug stammt. Infolgedessen kann dann eine Sperrung der Fahrzeugkomponente 31 erfolgen, die für eine Inbetriebnahme zunächst eine Freischaltung durch ein autorisiertes Unternehmen erforderlich macht. Das Zurücksetzen einer gebrauchten Fahrzeugkomponente zur Autorisierung von deren Betrieb in einem anderen Fahrzeug kann durch Löschen der darin gespeicherten Datenstruktur geschehen, wobei das Auslösen des Löschvorgangs gegenüber Unautorisierten abzusichern ist. Im Anschluss wird dann die erste von einer anderen Fahrzeugkomponente empfangene Datenstruktur übernommen.

Sollte dagegen nur eine geringfügige Abweichung erkannt werden, beispielsweise dass in der Datenstruktur nur die letzten ein oder zwei Blöcke fehlen, aber alle vorherigen Blöcke mit korrekten Werten der Prüfsummen vorhanden sind, so kann ggfs. auf eine vorübergehende Fehlfunktion der Fahrzeugkomponente geschlossen werden, die durch eine Resynchronisation mit der Datenstruktur des Fahrzeugs behoben werden kann.

Eine fabrikneue, nachträglich im Fahrzeug verbaute Fahrzeugkomponente weist dagegen überhaupt keine Datenstruktur auf. In einem solchen Fall übernimmt die neue Fahrzeugkomponente initial stets die erste empfangene Datenstruktur von einer anderen, bereits vorher im Fahrzeug verbauten Fahrzeugkomponente, so dass auch nachträglich verbaute fabrikneue Fahrzeugkomponenten unmittelbar dem Komponentenschutz unterworfen werden.

Die Erfindung kann zum Komponentenschutz beliebiger in einem Fahrzeug integrierter elektrischer Fahrzeugkomponenten, wie beispielsweise der diversen verbauten Steuergeräte, genutzt werden. Auch eine Aufnahme des zugehörigen Fahrzeugschlüssels des Fahrzeugs in den Komponentenschutz ist möglich.

### Bezugszeichenliste

- 1: Verfahrensschritt mit Speicherung eines ersten Blocks der Datenstruktur
- 2: Verfahrensschritt mit Erfassung von Daten zur Fahrzeugnutzung
- 3: Verfahrensschritt mit der Erzeugung eines neuen Blocks
- 4: Verfahrensschritt mit Übertragung des neuen Blocks an andere Fahrzeugkomponenten
- 5: Verfahrensschritt mit Überprüfung der Gültigkeit des neuen Blocks
- 6: Verfahrensschritt mit Mehrheitsentscheidung über Gültigkeit des neuen Blocks
- 7: Verfahrensschritt mit Ergänzung der Datenstruktur
- 8: Verfahrensschritt mit Einschränkung der Komponentennutzung
- 21: Erster Block der Datenstruktur
- 22: Auf den ersten Block folgende Blöcke der Datenstruktur
- 23: Letzter Block der Datenstruktur
- 24: Kopfdatenbereich
- 25: Nutzdatenbereich
- 31, 32, 33: Fahrzeugkomponenten
- 34: In den Fahrzeugkomponenten abgespeicherte Datenstruktur
- 35: Neuer lokaler Block in Fahrzeugkomponente

## Patentansprüche

1. Verfahren zur Sicherung von Fahrzeugkomponenten, das die folgenden Schritte umfasst:
- Erfassen (2) von Daten zur Fahrzeugnutzung durch eine erste von mehreren Fahrzeugkomponenten;
- Ergänzen (3) einer in der ersten Fahrzeugkomponente abgespeicherten Datenstruktur, die eine Liste von erfassten Daten zur Fahrzeugnutzung enthält, wobei die erfassten Daten in Blöcken (21, 22, 23) abgelegt werden, die miteinander verkettet sind, indem jeder Block eine kryptographische Prüfsumme des vorherigen Blocks enthält, um einen Block mit weiteren Daten zur Fahrzeugnutzung, wobei der Block durch diese erste Fahrzeugkomponente hinzugefügt wird und der hinzugefügte Block eine kryptographische Prüfsumme des bisher letzten Blocks der Datenstruktur enthält;
- Übertragen (4) des neuen Blocks an mindestens eine der anderen Fahrzeugkomponenten; und
- Überprüfen (5) der Gültigkeit des hinzugefügten Blocks mittels der enthaltenen kryptographischen Prüfsumme und einer lokal in der mindestens einen anderen Fahrzeugkomponente vorliegenden Fassung der Datenstruktur, wobei bei positivem Ergebnis der Überprüfung die ergänzte Datenstruktur in der mindestens einen anderen Fahrzeugkomponente abspeichert (7) wird und bei negativem Ergebnis der Überprüfung der Funktionsumfang der ersten Fahrzeugkomponente eingeschränkt wird (8) oder diese in dem Fahrzeug nicht in Betrieb genommen werden kann.

2. Verfahren nach Anspruch 1, wobei die Gültigkeit des hinzugefügten Blocks von mehreren anderen Fahrzeugkomponenten überprüft wird und mit einer Mehrheitsentscheidung entschieden wird (6), ob der neue Block akzeptiert wird.

3. Verfahren nach einem der vorhergehenden Ansprüche, wobei eine Fahrzeugkomponente, in der noch keine Datenstruktur abgespeichert ist, initial die erste von einer der anderen Fahrzeugkomponenten empfangene Datenstruktur übernimmt.

4. Verfahren nach einem der vorhergehenden Ansprüche, wobei bei einer Fahrzeugkomponente, die ursprünglich in einem ersten Fahrzeug verbaut war, zur Autorisierung der Inbetriebnahme in einem anderen Fahrzeug die in der Fahrzeugkomponente gespeicherte Datenstruktur gelöscht wird.

5. Verfahren nach einem der vorhergehenden Ansprüche, wobei bei dem Vorliegen unterschiedlicher Fassungen der Datenstruktur in den Fahrzeugkomponenten des Fahrzeugs die in der Mehrheit der Fahrzeugkomponenten vorliegende Datenstruktur verwendet wird.

6. Verfahren nach einem der vorhergehenden Ansprüche, wobei die Daten zur Fahrzeugnutzung mindestens den Kilometerstand des Fahrzeugs umfassen.

7. Fahrzeugkomponente, die zu ihrer Sicherung ein Verfahren nach einem der vorhergehenden Ansprüche ausführt.

8. Kraftfahrzeug, das eingerichtet ist, ein Verfahren gemäß einem der Ansprüche 1 bis 6 auszuführen oder mehrere Fahrzeugkomponenten gemäß Anspruch 7 aufweist.

## Claims

1. Method for securing vehicle components, comprising the following steps:
- capturing (2) data on vehicle usage by means of a first of a plurality of vehicle components;
- supplementing (3) a data structure which is stored in the first vehicle component and contains a list of captured data on vehicle usage, wherein the captured data are stored in blocks (21, 22, 23) which are linked to one another in that each block contains a cryptographic checksum of the previous block, with a block having further data on vehicle usage, wherein the block is added by this first vehicle component and the added block contains a cryptographic checksum of the most recent block of the data structure;
- transferring (4) the new block to at least one of the other vehicle components; and
- checking (5) the validity of the added block by means of the cryptographic checksum contained therein and a version of the data structure present locally in the at least one other vehicle component, wherein if the result of the check is positive, the supplemented data structure is stored (7) in the at least one other vehicle component, and if the result of the check is negative, the range of functions of the first vehicle component is restricted (8) or said component cannot be put into operation in the vehicle.

2. Method according to claim 1, wherein the validity of the added block is checked by a plurality of other vehicle components and a majority decision is made (6) as to whether the new block is accepted.

3. Method according to either of the preceding claims, wherein a vehicle component in which no data structure is yet stored initially adopts the first data structure received from one of the other vehicle components.

4. Method according to any of the preceding claims, wherein, in the case of a vehicle component which was originally installed in a first vehicle, the data structure stored in the vehicle component is deleted to authorize the component being put into operation in another vehicle.

5. Method according to any of the preceding claims, wherein, if different versions of the data structure are present in the vehicle components of the vehicle, the data structure present in the majority of the vehicle components is used.

6. Method according to any of the preceding claims, wherein the vehicle usage data comprise at least the mileage of the vehicle.

7. Vehicle component which carries out a method according to any of the preceding claims in order to secure said component.

8. Motor vehicle which is configured to carry out a method according to any of claims 1 to 6 or has a plurality of vehicle components according to claim 7.

## Revendications

1. Procédé de sécurisation de composants de véhicule, qui comprend les étapes suivantes :
- acquisition (2) de données relatives à l'utilisation du véhicule par un premier composant parmi plusieurs composants de véhicule ;
- complément (3) d'une structure de données stockée dans le premier composant de véhicule, qui contient une liste de données acquises relatives à l'utilisation du véhicule, dans lequel les données acquises sont enregistrées dans des blocs (21, 22, 23) qui sont concaténés les uns aux autres en ce que chaque bloc contient une somme de contrôle cryptographique du bloc précédent, par un bloc contenant d'autres données relatives à l'utilisation du véhicule, dans lequel le bloc est ajouté par ce premier composant de véhicule et le bloc ajouté contient une somme de contrôle cryptographique du dernier bloc jusqu'ici de la structure de données ;
- transmission (4) du nouveau bloc à au moins un des autres composants de véhicule - et
- contrôle (5) de la validité du bloc ajouté par le biais de la somme de contrôle cryptographique contenue et d'une version de la structure de données présente localement dans l'au moins un autre composant de véhicule, dans lequel la structure de données complétée est stockée (7) dans l'au moins un autre composant de véhicule en cas de résultat positif du contrôle et l'étendue des fonctions du premier composant de véhicule est limitée (8) ou celui-ci ne peut pas être mis en service dans le véhicule en cas de résultat négatif du contrôle.

2. Procédé selon la revendication 1, dans lequel la validité du bloc ajouté est contrôlée par plusieurs autres composants de véhicule et il est décidé (6) par une décision majoritaire si le nouveau bloc est accepté.

3. Procédé selon l'une des revendications précédentes, dans lequel un composant de véhicule, dans lequel aucune structure de données n'est encore stockée, prend initialement en charge la première structure de données reçue de l'un des autres composants de véhicule.

4. Procédé selon l'une des revendications précédentes, dans lequel, pour un composant de véhicule qui était initialement monté dans un premier véhicule, la structure de données mémorisée dans le composant de véhicule est effacée pour autoriser la mise en service dans un autre véhicule.

5. Procédé selon l'une des revendications précédentes, dans lequel, en présence de différentes versions de la structure de données dans les composants de véhicule, la structure de données présente dans la majorité des composants de véhicule est utilisée.

6. Procédé selon l'une des revendications précédentes, dans lequel les données relatives à l'utilisation du véhicule comprennent au moins le kilométrage du véhicule.

7. Composant de véhicule qui, pour sa sécurisation, met en œuvre un procédé selon l'une des revendications précédentes.

8. Véhicule automobile qui est conçu pour mettre en œuvre un procédé selon l'une des revendications 1 à 6 ou présente plusieurs composants de véhicule selon la revendication 7.
